(19) **Europäisches Patentamt**
**European Patent Office**
**Office européen des brevets**

(11) **EP 4 535 530 A1**

(12) **EUROPEAN PATENT APPLICATION**
published in accordance with Art. 153(4) EPC

(43) Date of publication:
09.04.2025  Bulletin 2025/15

(51) International Patent Classification (IPC):
$H01M\ 50/231^{(2021.01)}$     $H01M\ 50/224^{(2021.01)}$
$H01M\ 50/233^{(2021.01)}$     $H01M\ 50/242^{(2021.01)}$
$H01M\ 50/249^{(2021.01)}$

(21) Application number: 23815130.2

(22) Date of filing: 29.05.2023

(52) Cooperative Patent Classification (CPC):
B60L 50/64; B60L 50/60; H01M 50/224;
H01M 50/229; H01M 50/231; H01M 50/233;
H01M 50/24; H01M 50/242; H01M 50/244;
H01M 50/249; H01M 50/291; H01M 50/293;
H01M 2220/20; Y02E 60/10

(86) International application number:
PCT/CN2023/096761

(87) International publication number:
WO 2023/231949 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  31.05.2022  CN 202210609361

(71) Applicant: BYD Company Limited
Shenzhen, Guangdong 518118 (CN)

(72) Inventors:
• WAN, Long
  Shenzhen, Guangdong 518118 (CN)
• LU, Zhipei
  Shenzhen, Guangdong 518118 (CN)
• PENG, Qingbo
  Shenzhen, Guangdong 518118 (CN)
• ZHU, Yan
  Shenzhen, Guangdong 518118 (CN)
• TAN, Zhijia
  Shenzhen, Guangdong 518118 (CN)

(74) Representative: Mathys & Squire
The Shard
32 London Bridge Street
London SE1 9SG (GB)

(54) **BATTERY PROTECTIVE BOTTOM PLATE, BATTERY PACK COMPOSITE PROTECTIVE STRUCTURE, AND VEHICLE**

(57)    A battery protective bottom plate, a battery pack composite protective structure and a vehicle. The battery protective bottom plate comprises an upper fiber reinforced resin layer, a metal plate and a lower fiber reinforced resin layer, wherein the metal plate is located between the upper fiber reinforced resin layer and the lower fiber reinforced resin layer, and the following condition is satisfied: (I)

$$1 \le \frac{\rho_2 * (d_1 + d_2 + d_3)/d_2}{\rho_2 + (\rho_1 * d_1 + \rho_3 * d_3)/(d_1 + d_3)} * \frac{(\sigma_1 * d_1 + \sigma_3 * d_3)/(d_1 + d_3)}{\sigma_2} \le 2.$$

**EP 4 535 530 A1**

1

11

12

13

14

FIG. 1

**Description**

**CROSS-REFERENCE TO RELATED APPLICATIONS**

The present disclosure is provided based on Chinese Patent Application No. 202210609361.0 filed on May 31, 2022, and claims priority to the above Chinese Patent Application. The entire content of the above Chinese Patent Application is incorporated herein by reference.

**FIELD**

The present disclosure relates to the technical field of vehicle batteries, and specifically, to a battery protection bottom plate, a battery pack composite protection structure and a vehicle.

**BACKGROUND**

A battery pack of a new energy electric vehicle is usually arranged at a bottom of the vehicle. Faced with complicated working conditions, the battery pack is susceptible to an impact from a hard object such as an external stone during vehicle driving. Therefore, it is usually necessary to take certain protective measures at a bottom of the battery pack to prevent the battery pack from being affected by the impact, which otherwise causes the problems of surface damage and electrolyte solution leakage. An existing battery pack bottom protection scheme is mainly to protect the bottom of the battery pack by providing a steel plate. In order to prevent the steel plate from being corroded by water vapor and other factors, an electrophoresis process is adopted for anti-corrosion treatment. In addition, since a bottom of the steel plate is directly exposed at a bottom of a vehicle body, it is necessary to spray a PVC layer with a thickness ranging from 0.5 mm to 1.2 mm on a side of the steel plate facing a ground so as to resist a stone impact, and prevent an electrophoretic layer from being scratched, thereby avoiding affecting an anti-corrosion effect.

Because a flat steel plate has poor overall stiffness, it is necessary to punch the steel plate. However, it is difficult to punch a high-strength steel plate used for an existing battery pack bottom protection structure, which has the problem of affecting production efficiency. In addition, an existing steel plate has poor overall impact resistance, and the steel plate generates high vibration when impacted. This easily causes damage or dropping of a rivet and another connection member at a position where the steel plate is mounted, and the PVC layer on a surface of the steel plate is likely to drop due to the impact, which affects corrosion resistance of the steel plate.

**SUMMARY**

Against the problems that an existing battery pack bottom protection structure has insufficient impact resistance and connection failure under a vibration condition, the present disclosure provides a battery protection bottom plate, a battery pack composite protection structure and a vehicle.

The technical solutions adopted by the present disclosure to solve the above technical problems are as follows.

In a first aspect, the present disclosure provides a battery protection bottom plate, including an upper fiber reinforced resin layer, a metal plate and a lower fiber reinforced resin layer. The metal plate is located between the upper fiber reinforced resin layer and the lower fiber reinforced resin layer. The metal plate, the upper fiber reinforced resin layer and the lower fiber reinforced resin layer satisfy the following condition:

$$1 \leq \frac{\rho_2*(d_1+d_2+d_3)/d_2}{\rho_2+(\rho_1*d_1+\rho_3*d_3)/(d_1+d_3)} * \frac{(\sigma_1*d_1+\sigma_3*d_3)/(d_1+d_3)}{\sigma_2} \leq 2$$

where $d_1$ is a thickness of the lower fiber reinforced resin layer in mm; $d_2$ is a thickness of the metal plate in mm; $d_3$ is a thickness of the upper fiber reinforced resin layer in mm; $\rho_1$ is a density of the lower fiber reinforced resin layer in g/cm$^3$; $\rho_2$ is a density of the metal plate in g/cm$^3$; $\rho_3$ is a density of the upper fiber reinforced resin layer in g/cm$^3$; $\sigma_1$ is a tensile strength of the lower fiber reinforced resin layer in MPa; $\sigma_2$ is a tensile strength of the metal plate in MPa; and $\sigma_3$ is a tensile strength of the upper fiber reinforced resin layer in MPa.

In some embodiments, the metal plate, the upper fiber reinforced resin layer and the lower fiber reinforced resin layer satisfy the following condition: 1. $1 \leq \frac{\rho_2*(d_1+d_2+d_3)/d_2}{\rho_2+(\rho_1*d_1+\rho_3*d_3)/(d_1+d_3)} * \frac{(\sigma_1*d_1+\sigma_3*d_3)/(d_1+d_3)}{\sigma_2} \leq 1.9$ .

In some embodiments, the thickness $d_3$ of the upper fiber reinforced resin layer ranges from 0.4 mm to 1.6 mm; and the thickness $d_1$ of the lower fiber reinforced resin layerranges from 0.6 mm to 2 mm.

In some embodiments, the thickness $d_2$ of the metal plate ranges from 0.7 mm to 1.6 mm.

In some embodiments, the density $\rho_2$ of the metal plate ranges from 2.7 g/cm$^3$ to 8.5 g/cm$^3$.

In some embodiments, the density $\rho_3$ of the upper fiber reinforced resin layer ranges from 1.3 g/cm$^3$ to 1.9 g/cm$^3$, and the density $\rho_1$ of the lower fiber reinforced resin layer ranges from 1.3 g/cm$^3$ to 1.9 g/cm$^3$.

In some embodiments, the tensile strength $\sigma_2$ of the metal plate ranges from 590 MPa to 1180 MPa.

In some embodiments, the tensile strength $\sigma_3$ of the upper fiber reinforced resin layer ranges from 240 MPa to 380 MPa, and the tensile strength $\sigma_1$ of the lower fiber reinforced resin layer ranges from 240 MPa to 380 MPa.

In some embodiments, the battery protection bottom plate further includes a fiber reinforced resin frame. The metal plate and the fiber reinforced resin frame are located between the upper fiber reinforced resin layer and the lower fiber reinforced resin layer. The metal plate is located inside the fiber reinforced resin frame. A top surface of the fiber reinforced resin frame is integrally connected to the upper fiber reinforced resin layer, and a bottom surface of the fiber reinforced resin frame is integrally connected to the lower fiber reinforced resin layer.

In some embodiments, multiple mounting holes are spaced away in an inner side of an edge of the battery protection bottom plate, and the mounting holes sequentially run through the upper fiber reinforced resin layer, the fiber reinforced resin frame and the lower fiber reinforced resin layer.

In some embodiments, the upper fiber reinforced resin layer, the fiber reinforced resin frame and the lower fiber reinforced resin layer each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

In some embodiments, the upper fiber reinforced resin layer, the fiber reinforced resin frame and the lower fiber reinforced resin layer each are a glass fiber reinforced resin member, the glass fiber reinforced resin member contains a glass fiber with a content ranging from 50% to 70%, and the glass fiber has an alkali content less than 0.8%.

In some embodiments, the upper fiber reinforced resin layer includes multiple layers of first fiber reinforced prepregs stacked with each other; the fiber reinforced resin frame includes multiple layers of second fiber reinforced prepregs stacked with each other; and the lower fiber reinforced resin layer includes multiple layers of third fiber reinforced prepregs stacked with each other.

In some embodiments, the metal plate is a steel plate, and a galvanized layer, a galvanized iron alloy layer or an electrophoretic paint protective layer is arranged at an outer surface of the steel plate.

In another aspect, the present disclosure further provides a battery pack composite protection structure, including a battery pack and the battery protection bottom plate as described above. The battery protection bottom plate is arranged below the battery pack, and a buffer zone is formed between the battery pack and the battery protection bottom plate.

In some embodiments, the buffer zone is filled with a buffer layer, and the buffer layer is selected from a honeycomb material or a rigid foam material.

In another aspect, the present disclosure provides a vehicle, including the battery protection bottom plate or the battery pack composite protection structure as described above.

In the battery protection bottom plate according to the present disclosure, the upper fiber reinforced resin layer and the lower fiber reinforced resin layer are compounded on a front surface and a back surface of the metal plate, so that on the one hand, the upper fiber reinforced resin layer and the lower fiber reinforced resin layer can improve corrosion resistance of the metal plate. In addition, the lower fiber reinforced resin layer can resist an impact of stones and the like on a bottom of the battery protection bottom plate, thereby avoiding the corrosion problem of an impacted part. On the other hand, after the upper fiber reinforced resin layer and the lower fiber reinforced resin layer are compounded with the metal plate, the stiffness and strength of the metal plate are effectively improved, and the metal plate has higher impact resistance, so that the metal plate does not need to be additionally punched, thereby improving production efficiency.

Further, in terms of improving impact resistance of the battery protection bottom plate, there is a clear correlation between the thickness $d_3$ of the upper fiber reinforced resin layer, the thickness $d_1$ of the lower fiber reinforced resin layer, the thickness $d_2$ of the metal plate, the density $\rho_2$ of the metal plate, the density $\rho_3$ of the upper fiber reinforced resin layer, the density $\rho_1$ of the lower fiber reinforced resin layer, the tensile strength $\sigma_2$ of the metal plate, the tensile strength $\sigma_3$ of the upper fiber reinforced resin layer and the tensile strength $\sigma_1$ of the lower fiber reinforced resin layer. Specifically, when the thickness $d_3$ of the upper fiber reinforced resin layer, the thickness $d_1$ of the lower fiber reinforced resin layer, the thickness $d_2$ of the metal plate, the density $\rho_2$ of the metal plate, the density $\rho_3$ of the upper fiber reinforced resin layer, the density $\rho_1$ of the lower fiber reinforced resin layer, the tensile strength $\sigma_2$ of the metal plate, the tensile strength $\sigma_3$ of the upper fiber reinforced resin layer and the tensile strength $\sigma_1$ of the lower fiber reinforced resin layer satisfy a relationship:

$$1 \leq \frac{\rho2*(d1+d2+d3)/d2}{\rho2+(\rho1*d1+\rho3*d3)/(d1+d3)} * \frac{(\sigma1*d1+\sigma3*d3)/(d1+d3)}{\sigma2} \leq 2$$

, it is ensured that the upper fiber reinforced resin layer and the lower fiber reinforced resin layer of the battery protection bottom plate are not damaged when the battery protection bottom plate is subjected to an energy impact at a certain speed, which can adapt to application conditions under long-term impact conditions. In addition, a risk of connection failure of the battery protection bottom plate under long-term vibration conditions is reduced, thereby improving connection stability of a position where the battery protection bottom plate is improved.

## BRIEF DESCRIPTION OF THE DRAWINGS

FIG. 1 is a schematic structural diagram of a battery protection bottom plate according to an embodiment of the present disclosure;

FIG. 2 is a schematic structural diagram of different first fiber reinforced prepreg unidirectional tapes in an upper fiber reinforced resin layer according to an embodiment of the present disclosure;

FIG. 3 is a schematic structural diagram of different first fiber woven fabric reinforced prepregs in an upper fiber reinforced resin layer according to an embodiment of the present disclosure;

FIG. 4 is a schematic structural diagram of a battery pack composite protection structure according to an embodiment of the present disclosure;

FIG. 5 is a schematic enlarged view of a part A of FIG. 4;

FIG. 6 is a schematic sectional view of a bottom of a battery pack composite protection structure according to an embodiment of the present disclosure;

FIG. 7 is a schematic sectional view of a bottom of a battery pack composite protection structure according to another embodiment of the present disclosure;

FIG. 8 is a schematic sectional view of a bottom of a battery pack composite protection structure according to still another embodiment of the present disclosure; and

FIG. 9 is a schematic diagram of a vehicle according to an embodiment of the present disclosure.

In the drawings:

100. Vehicle; 10. Battery pack composite protection structure;

1. Battery protection bottom plate; 11. Upper fiber reinforced resin layer; 110. First fiber reinforced prepreg; 111. First fiber reinforced prepreg unidirectional tape; 112. First fiber woven fabric reinforced prepreg; 12. Metal plate; 13. Fiber reinforced resin frame; 14. Lower fiber reinforced resin layer; 15. Mounting hole; 2. Buffer layer; 3. Battery pack; 31. Tray; 4. Buffer zone.

## DETAILED DESCRIPTION

To make the to-be-solved technical problems, technical solutions and beneficial effects of the present disclosure clearer, the present disclosure is further described in detail below with reference to accompanying drawings and embodiments. It should be understood that the specific embodiments described herein are merely used to explain the present disclosure but are not intended to limit the present disclosure.

In the description of the present disclosure, it should be understood that orientation or position relationships indicated by the terms such as "upper", "lower", "top", "bottom", "inner" and "outer" are based on orientation or position relationships shown in the accompanying drawings, and are merely for ease of description of the present disclosure and simplification of the description, rather than indicating or implying that the apparatus or element referred to needs to have a specific orientation or be constructed and operated in a specific orientation, and therefore cannot be construed as limiting the present disclosure. In the description of the present disclosure, unless otherwise stated, "a plurality of/multiple" means two or more.

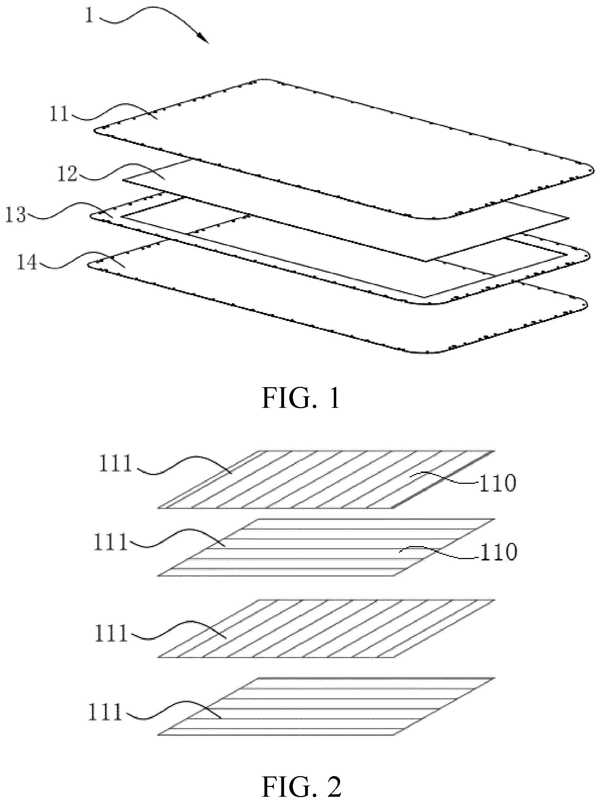

As shown in FIG. 1, an embodiment of the present disclosure provides a battery protection bottom plate 1, including an upper fiber reinforced resin layer 11, a metal plate 12 and a lower fiber reinforced resin layer 14. The metal plate 12 is located between the upper fiber reinforced resin layer 11 and the lower fiber reinforced resin layer 14. The metal plate 12, the upper fiber reinforced resin layer 11 and the lower fiber reinforced resin layer 14 satisfy the following condition:

$$1 \leq \frac{\rho_2 * (d_1 + d_2 + d_3)/d_2}{\rho_2 + (\rho_1 * d_1 + \rho_3 * d_3)/(d_1 + d_3)} * \frac{(\sigma_1 * d_1 + \sigma_3 * d_3)/(d_1 + d_3)}{\sigma_2} \leq 2$$

where $d_1$ is a thickness of the lower fiber reinforced resin layer 14 in mm; $d_2$ is a thickness of the metal plate 12 in mm; $d_3$ is a thickness of the upper fiber reinforced resin layer 11 in mm; $\rho_1$ is a density of the lower fiber reinforced resin layer 14 in g/cm$^3$; $\rho_2$ is a density of the metal plate 12 in g/cm$^3$; $\rho_3$ is a density of the upper fiber reinforced resin layer 11 in g/cm$^3$; $\sigma_1$ is a tensile strength of the lower fiber reinforced resin layer 14 in MPa; $\sigma_2$ is a tensile strength of the metal plate 12 in MPa;

and $\sigma_3$ is a tensile strength of the upper fiber reinforced resin layer 11 in MPa.

The upper fiber reinforced resin layer 11 and the lower fiber reinforced resin layer 14 are compounded on a front surface and a back surface of the metal plate 12, so that on the one hand, the upper fiber reinforced resin layer 11 and the lower fiber reinforced resin layer 14 can improve corrosion resistance of the metal plate 12. In addition, the lower fiber reinforced resin layer 14 can resist an impact of stones and the like on a bottom of the battery protection bottom plate 1, thereby avoiding the corrosion problem of an impacted part. On the other hand, after the upper fiber reinforced resin layer 11 and the lower fiber reinforced resin layer 14 are compounded with the metal plate 12, the stiffness and strength of the metal plate 12 are effectively improved, and the metal plate has higher impact resistance, so that the metal plate 12 does not need to be additionally punched, thereby improving production efficiency.

Further, in terms of improving impact resistance of the battery protection bottom plate 1, there is a clear correlation between the thickness $d_3$ of the upper fiber reinforced resin layer 11, the thickness $d_1$ of the lower fiber reinforced resin layer 14, the thickness $d_2$ of the metal plate 12, the density $\rho_2$ of the metal plate 12, the density $\rho_3$ of the upper fiber reinforced resin layer 11, the density $\rho_1$ of the lower fiber reinforced resin layer 14, the tensile strength $\sigma_2$ of the metal plate 12, the tensile strength $\sigma_3$ of the upper fiber reinforced resin layer 11 and the tensile strength $\sigma_1$ of the lower fiber reinforced resin layer 14. Specifically, when the thickness $d_3$ of the upper fiber reinforced resin layer 11, the thickness $d_1$ of the lower fiber reinforced resin layer 14, the thickness $d_2$ of the metal plate 12, the density $\rho_2$ of the metal plate 12, the density $\rho_3$ of the upper fiber reinforced resin layer 11, the density $\rho_1$ of the lower fiber reinforced resin layer 14, the tensile strength $\sigma_2$ of the metal plate 12, the tensile strength $\sigma_3$ of the upper fiber reinforced resin layer 11 and the tensile strength $\sigma_1$ of the lower fiber reinforced resin layer 14 satisfy a relationship: $1 \leq$

$$\frac{\rho_2 * (d_1 + d_2 + d_3)/d_2}{\rho_2 + (\rho_1 * d_1 + \rho_3 * d_3)/(d_1 + d_3)} * \frac{(\sigma_1 * d_1 + \sigma_3 * d_3)/(d_1 + d_3)}{\sigma_2} \leq 2$$

, it is ensured that the upper fiber reinforced resin layer 11 and the lower fiber reinforced resin layer 14 of the battery protection bottom plate are not damaged when the battery protection bottom plate 1 is subjected to an energy impact at a certain speed, which can adapt to application conditions under long-term impact conditions. In addition, a risk of connection failure of the battery protection bottom plate 1 under long-term vibration conditions is reduced, thereby improving connection stability of a position where the battery protection bottom plate 1 is improved.

In some embodiments, the metal plate 12, the upper fiber reinforced resin layer 11 and the lower fiber reinforced resin layer 14 satisfy the following condition: $1.1 \leq \dfrac{\rho_2 * (d_1 + d_2 + d_3)/d_2}{\rho_2 + (\rho_1 * d_1 + \rho_3 * d_3)/(d_1 + d_3)} * \dfrac{(\sigma_1 * d_1 + \sigma_3 * d_3)/(d_1 + d_3)}{\sigma_2} \leq 1.9$ .

Through the definition of the above relationship, influences of material selection of the metal plate 12, the upper fiber reinforced resin layer 11 and the lower fiber reinforced resin layer 14 on impact resistance of the battery pack 3 can be synthesized, which is beneficial to improving the service life of the battery pack 3.

In some embodiments, the thickness $d_3$ of the upper fiber reinforced resin layer 11 ranges from 0.4 mm to 1.6 mm; and the thickness $d_1$ of the lower fiber reinforced resin layer 14 ranges from 0.6 mm to 2 mm.

Specifically, the thickness $d_3$ of the upper fiber reinforced resin layer 11 may be 0.4 mm, 0.5 mm, 0.6 mm, 0.7 mm, 0.8 mm, 0.9mm, 1.0 mm, 1.1 mm, 1.2 mm, 1.3 mm, 1.4 mm, 1.5 mm, 1.6 mm, or the like. The thickness $d_1$ of the lower fiber reinforced resin layer 14 may be 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.8 mm, 2.0 mm, or the like.

The thickness $d_3$ of the upper fiber reinforced resin layer 11 and the thickness $d_1$ of the lower fiber reinforced resin layer 14 affect a protection effect on the metal plate 12 and an enhancement effect on mechanical properties of the metal plate 12. When the thickness $d_3$ of the upper fiber reinforced resin layer 11 and the thickness $d_1$ of the lower fiber reinforced resin layer 14 are in the above ranges, dropping from a surface of the metal plate 12 can be prevented under a high-energy impact, and anti-corrosion and strength enhancement effects on the metal plate 12 can be effectively maintained.

In some embodiments, the thickness $d_2$ of the metal plate 12 ranges from 0.7 mm to 1.6 mm.

Specifically, the thickness d2 of the metal plate 12 may be 0.7 mm, 0.8 mm, 0.9 mm, 1.0 mm, 1.1 mm, 1.2 mm, 1.3 mm, 1.4 mm, 1.5 mm, 1.6 mm, or the like.

The thickness $d_2$ of the metal plate 12 affects the overall mechanical strength of the battery protection bottom plate 1. When the tensile strength of the metal plate 12 is constant, the protection strength thereof gradually increases as the thickness of the metal plate 12 increases, but a material cost thereof also gradually increases, and a ground clearance of a bottom of a vehicle 100 is reduced. When the thickness $d_2$ of the metal plate 12 is within the above range, the overall mechanical strength of the battery protection bottom plate 1 can be ensured, the cost can be effectively controlled, a distance from a ground can be ensured, and lightweight control of the vehicle 100 can be facilitated.

In some embodiments, the density $\rho_2$ of the metal plate 12 ranges from 2.7 g/cm$^3$ to 8.5 g/cm$^3$.

Specifically, the density $\rho_2$ of the metal plate 12 may be 2.7 g/cm$^3$, 3.1 g/cm$^3$, 3.5 g/cm$^3$, 4.2 g/cm$^3$, 4.8 g/cm$^3$, 5.3 g/cm$^3$, 5.7 g/cm$^3$, 6.0 g/cm$^3$, 6.7 g/cm$^3$, 7.5 g/cm$^3$, 7.6 g/cm$^3$, 7.8 g/cm$^3$, 8.0 g/cm$^3$, 8.1 g/cm$^3$, 8.2 g/cm$^3$, 8.3 g/cm$^3$, 8.4 g/cm$^3$, 8.5 g/cm$^3$, or the like.

The density $\rho_2$ of the metal plate 12 can be adjusted by selecting a material and a specific model of the metal plate 12, and is related to the weight and mechanical strength of the metal plate 12. When the density $\rho_2$ of the metal plate 12 is in the above range, the metal plate has a good mechanical strength and is beneficial to the lightweight control of the vehicle 100.

In some embodiments, the density $\rho_3$ of the upper fiber reinforced resin layer 11 ranges from 1.3 g/cm$^3$ to 1.9 g/cm$^3$, and the density $\rho_1$ of the lower fiber reinforced resin layer 14 ranges from 1.3 g/cm$^3$ to 1.9 g/cm$^3$.

Specifically, the density $\rho_3$ of the upper fiber reinforced resin layer 11 and the density $\rho_1$ of the lower fiber reinforced resin layer 14 each may be independently selected from 1.3 g/cm$^3$, 1.4 g/cm$^3$, 1.5 g/cm$^3$, 1.6 g/cm$^3$, 1.7 g/cm$^3$, 1.8 g/cm$^3$, 1.9 g/cm$^3$, or the like.

The density $\rho_3$ of the upper fiber reinforced resin layer 11 and the density $\rho_1$ of the lower fiber reinforced resin layer 14 are related to materials of selected resins and reinforcing fibers, and are affected by a content of the reinforcing fibers. When the density $\rho_3$ of the upper fiber reinforced resin layer 11 and the density $\rho_1$ of the lower fiber reinforced resin layer 14 are in the above ranges, there are enough reinforcing fibers, which is beneficial to improving the tensile strength of the upper fiber reinforced resin layer 11 and the lower fiber reinforced resin layer 14.

In some embodiments, the tensile strength $\sigma_2$ of the metal plate 12 ranges from 590 MPa to 1180 MPa.

Specifically, the tensile strength $\sigma_2$ of the metal plate 12 may be 590 MPa, 600 MPa, 650 MPa, 700 MPa, 750 MPa, 800 MPa, 850 MPa, 900 MPa, 950 MPa, 1000 MPa, 1180 MPa, or the like.

The tensile strength $\sigma_2$ of the metal plate 12 may be tested according to Metallic materials---Tensile testing---Part 1: Method of test at room temperature in GB/T 228.1-2010. When the tensile strength $\sigma_2$ is higher, the metal plate 12 can resist a higher impact without irreversible deformation. However, generally, a higher tensile strength $\sigma_2$ of the metal plate 12 indicates lower elongation at break thereof. When the tensile strength $\sigma_2$ of the metal plate 12 is within the above range, the impact strength and cracking resistance of the metal plate 12 can be effectively ensured.

In some embodiments, the tensile strength $\sigma_3$ of the upper fiber reinforced resin layer 11 ranges from 240 MPa to 380 MPa, and the tensile strength $\sigma_1$ of the lower fiber reinforced resin layer 14 ranges from 240 MPa to 380 MPa.

Specifically, the tensile strength $\sigma_3$ of the upper fiber reinforced resin layer 11 and the tensile strength $\sigma_1$ of the lower fiber reinforced resin layer 14 each may be independently selected from 240 MPa, 280 MPa, 290 MPa, 300 MPa, 310 MPa, 320 MPa, 330 MPa, 340 MPa, 350 MPa, 360 MPa, 370 MPa, 380 MPa, or the like.

The tensile strength $\sigma_3$ of the upper fiber reinforced resin layer 11 and the tensile strength $\sigma_1$ of the lower fiber reinforced resin layer 14 may be tested according to Fiber-reinforced plastics composites---Determination of tensile properties in GB/T 1447-2005. Type I samples are suitable for fiber reinforced thermoplastic plates, and samples are manufactured according to type I samples specified in the national standard for testing. The improvement of the tensile strength $\sigma_3$ of the upper fiber reinforced resin layer 11 and the tensile strength $\sigma_1$ of the lower fiber reinforced resin layer 14 is beneficial to enhancing deformation resistance of the upper fiber reinforced resin layer 11 and the lower fiber reinforced resin layer 14. However, as the tensile strength $\sigma_3$ of the upper fiber reinforced resin layer 11 and the tensile strength $\sigma_1$ of the lower fiber reinforced resin layer 14 increase, adhesion of the upper fiber reinforced resin layer 11 and the lower fiber reinforced resin layer 14 to the metal plate 12 may be affected, resulting in impact delamination. When the tensile strength $\sigma_3$ of the upper fiber reinforced resin layer 11 and the tensile strength $\sigma_1$ of the lower fiber reinforced resin layer 14 are within the above range, the upper fiber reinforced resin layer 11 and the lower fiber reinforced resin layer 14 can effectively resist an external impact without delamination or dropping.

The above nine parameters are interrelated and inseparable in terms of improving the battery pack 3 to avoid delamination and resist rivet fatigue damage. For example, when the thickness $d_3$ of the upper fiber reinforced resin layer 11, the thickness $d_2$ of the metal plate 12 or the thickness $d_1$ of the lower fiber reinforced resin layer 14 increases, or the density $\rho_2$ of the metal plate 12, the density $\rho_3$ of the upper fiber reinforced resin layer 11 or the density $\rho_1$ of the lower fiber reinforced resin layer 14 increases, impact resistance of the battery protection bottom plate 1 is improved, and at the same time, requirements for the tensile strength $\sigma_2$ of the metal plate 12, the tensile strength $\sigma_3$ of the upper fiber reinforced resin layer 11 and the tensile strength $\sigma_1$ of the lower fiber reinforced resin layer 14 can be reduced. This, however, correspondingly leads to the increase of the total mass and total thickness of the battery protection bottom plate 1, which is not beneficial to satisfying lightweight requirements for the vehicle 100 and controlling costs, and leads to the reduction of the ground clearance of the vehicle 100. When the tensile strength $\sigma_2$ of the metal plate 12 increases, deformation resistance thereof is enhanced, but the metal plate is more susceptible to fracture when deformed. When the tensile strength $\sigma_2$ of the metal plate 12 is not well matched with the tensile strength $\sigma_3$ of the upper fiber reinforced resin layer 11 and the tensile strength $\sigma_1$ of the lower fiber reinforced resin layer 14, unsynchronized vibration is easily caused, which is more likely to cause delamination. Therefore, an influence of each factor on protective performance and anti-vibration performance of the battery pack 3 are synthesized by the relationship

$$1 \leq \frac{\rho_2 * (d_1 + d_2 + d_3)/d_2}{\rho_2 + (\rho_1 * d_1 + \rho_3 * d_3)/(d_1 + d_3)} * \frac{(\sigma_1 * d_1 + \sigma_3 * d_3)/(d_1 + d_3)}{\sigma_2} \leq 2$$

, which achieves a better impact resistance effect and a longer service life.

As shown in FIG. 1, in some embodiments, the battery protection bottom plate 1 further includes a fiber reinforced resin frame 13. The metal plate 12 and the fiber reinforced resin frame 13 are located between the upper fiber reinforced resin layer 11 and the lower fiber reinforced resin layer 14. The metal plate 12 is located inside the fiber reinforced resin frame 13. A top surface of the fiber reinforced resin frame 13 is integrally connected to the upper fiber reinforced resin layer 11, and a bottom surface of the fiber reinforced resin frame 13 is integrally connected to the lower fiber reinforced resin layer 14.

The fiber reinforced resin frame 13 is arranged on a periphery of the metal plate 12 as a frame connection transition member for the upper fiber reinforced resin layer 11 and the lower fiber reinforced resin layer 14. This can effectively offset an influence of the thickness of the metal plate 12 on frame connection for the upper fiber reinforced resin layer 11 and the lower fiber reinforced resin layer 14, ensure the strength of a frame of the battery protection bottom plate 1, and further facilitate use of the frame of the battery protection bottom plate 1 as a mounting structure of the battery protection bottom plate on a battery, and improve impact resistance of the battery protection bottom plate.

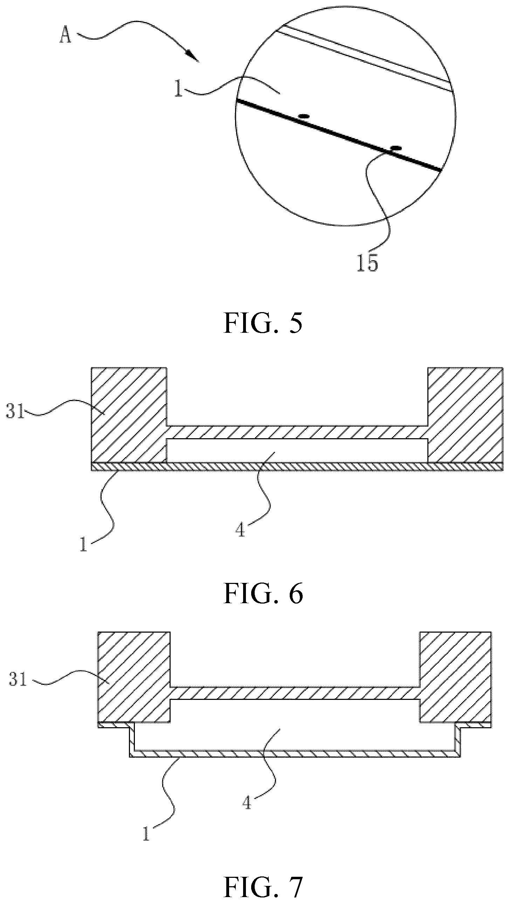

As shown in FIG. 5, in some embodiments, multiple mounting holes 15 are spaced away in an inner side of an edge of the battery protection bottom plate 1, and the mounting holes 15 sequentially run through the upper fiber reinforced resin layer 11, the fiber reinforced resin frame 13 and the lower fiber reinforced resin layer 14.

The mounting holes 15 are configured to mount and fasten the battery protection bottom plate 1 to a bottom of the battery pack 3. The mounting holes 15 are provided in the inner side of the edge of the battery protection bottom plate 1 and sequentially run through the upper fiber reinforced resin layer 11, the fiber reinforced resin frame 13 and the lower fiber reinforced resin layer 14, so that the mounting holes 15 can be prevented from running through the metal plate 12, and the corrosion problem caused by the exposure of the metal plate 12 at the mounting holes 15 can be avoided. In addition, the fiber reinforced resin frame 13 is beneficial to improving the overall thickness and tensile shear strength of a mounting position, and has sufficient mounting stability.

The multiple mounting holes 15 are provided around the periphery of the metal plate 12, so as to uniformly disperse a top gravity and a bottom impact force on the metal plate 12.

Specifically, during mounting, a connection member is provided to pass through the mounting hole 15 to secure the battery protection bottom plate 1 to the bottom of the battery pack 3. The connection member is a rivet, a screw or a bolt.

In different embodiments, resins of the upper fiber reinforced resin layer 11, the fiber reinforced resin frame 13 and the lower fiber reinforced resin layer 14 each are independently selected from thermosetting and/or thermoplastic materials. Examples may include, but are not limited to, an epoxy resin, phenolic plastic, phenols, cyanate esters, imides (such as polyimide, bismaleimide (BMI) and polyetherimide), polypropylenes, polyesters, benzoxazines, polybenzimidazoles, polybenzothiazoles, polyamides, polyamideimides, polysulfones, polyethersulfones, polycarbonates, polyethylene terephthalates and polyether ketones (such as polyether ketone (PEK), polyetheretherketone (PEEK) and polyether ketone ketone (PEKK)), and a combination thereof.

In different embodiments, fibers of the upper fiber reinforced resin layer 11, the fiber reinforced resin frame 13 and the lower fiber reinforced resin layer 14 each are independently selected from a glass fiber, an aramid fiber, a carbon fiber, a graphite fiber, a boron fiber, an aromatic polyamide fiber and a mixture thereof.

The fibers of the upper fiber reinforced resin layer 11, the fiber reinforced resin frame 13 and the lower fiber reinforced resin layer 14 may be embedded in resins in the form of chopped fibers, long-cut fibers, non-woven fabrics, unidirectional reinforced fiber base materials, woven fabrics, and the like.

In some embodiments, the upper fiber reinforced resin layer 11, the fiber reinforced resin frame 13 and the lower fiber reinforced resin layer 14 each are independently selected from a glass fiber reinforced polyamide resin member or a glass fiber reinforced polypropylene resin member, a glass fiber reinforced polyethylene resin member, a glass fiber reinforced polycarbonate resin member or a glass fiber reinforced polystyrene resin member.

In some embodiments, the fiber reinforced resin layer, the fiber reinforced resin frame 13 and the lower fiber reinforced resin layer 14 are made of a same resin material, and the same resin material can ensure affinity of materials between different layers, thereby ensuring an integration degree of combination between different layers and improving the overall strength.

In some embodiments, the upper fiber reinforced resin layer 11, the fiber reinforced resin frame 13 and the lower fiber reinforced resin layer 14 each are a glass fiber reinforced resin member, and the glass fiber reinforced resin member contains a glass fiber with a content ranging from 50% to 70%, which is beneficial to improving the material strength of the upper fiber reinforced resin layer 11, the fiber reinforced resin frame 13 and the lower fiber reinforced resin layer 14.

In some embodiments, the alkali content of the glass fiber is less than 0.8%.

When the alkali content of the glass fiber is less than 0.8%, aging resistance of the upper fiber reinforced resin layer 11, the fiber reinforced resin frame 13 and the lower fiber reinforced resin layer 14 are improved, and performance attenuation of the material after long-term use is slowed down.

In some embodiments, the glass fiber is selected from an E-glass fiber or an S-glass fiber.

In some embodiments, the upper fiber reinforced resin layer 11 includes multiple layers of first fiber reinforced prepregs stacked with each other; the fiber reinforced resin frame 13 includes multiple layers of second fiber reinforced prepregs stacked with each other; and the lower fiber reinforced resin layer 14 includes multiple layers of third fiber reinforced prepregs stacked with each other.

As shown in FIG. 2, the upper fiber reinforced resin layer 11 includes multiple layers of first fiber reinforced prepreg unidirectional tapes 111 stacked with each other. Fiber arrangement directions of two adjacent layers of first fiber reinforced prepreg unidirectional tapes 111 are staggered at approximately 90°, and an allowable ply angle deviation range of two adjacent layers of first fiber reinforced prepreg unidirectional tapes 111 is ±20°.

Fibers of each first fiber reinforced prepreg unidirectional tape 111 are provided unidirectionally, and when subjected to a tensile force along a fiber extension direction, the fibers of the first fiber reinforced prepreg unidirectional tape 111 can effectively bear the tensile force. Stress uniformity of the upper fiber reinforced resin layer 11 in each direction is improved by staggering fiber arrangement directions of adjacent first fiber reinforced prepreg unidirectional tapes at approximately 90°.

The fiber reinforced resin frame 13 includes multiple layers of second fiber reinforced prepreg unidirectional tapes stacked with each other. Fibers of each second fiber reinforced prepreg unidirectional tape are unidirectionally arranged. Fiber arrangement directions of two adjacent layers of second fiber reinforced prepreg unidirectional tapes are staggered at approximately 90°, and an allowable ply angle deviation range of two adjacent layers of second fiber reinforced prepreg unidirectional tapes is ±20°.

The lower fiber reinforced resin layer 14 includes multiple layers of third fiber reinforced prepreg unidirectional tapes stacked with each other. Fibers of each third fiber reinforced prepreg unidirectional tape are unidirectionally arranged. Fiber arrangement directions of two adjacent layers of third fiber reinforced prepreg unidirectional tapes are staggered at approximately 90°, and an allowable ply angle deviation range of two adjacent layers of third fiber reinforced prepreg unidirectional tapes is ±20°.

Fiber arrangements of the fiber reinforced resin frame 13 and the lower fiber reinforced resin layer 14 are similar to those of the upper fiber reinforced resin layer 11, and details are not repeated.

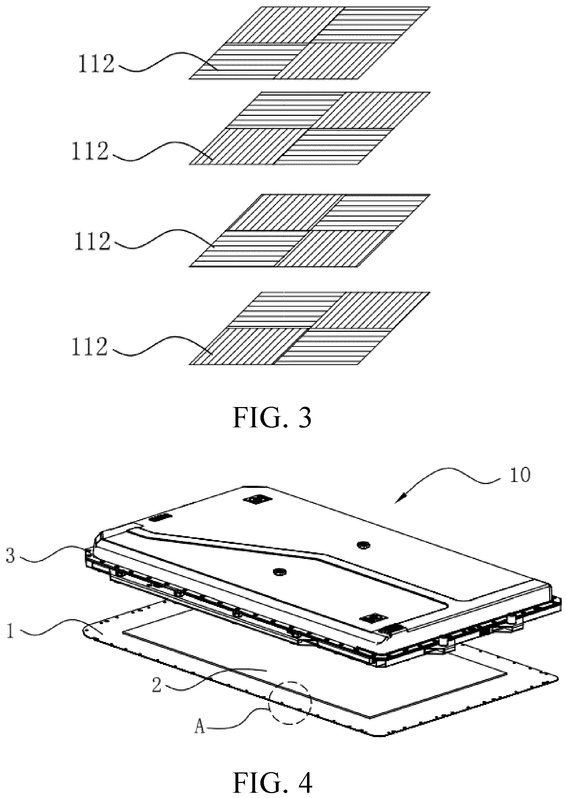

As shown in FIG. 3, in another embodiment, the upper fiber reinforced resin layer 11 includes multiple layers of first fiber woven fabric reinforced prepregs 112 stacked with each other, and fibers of each first fiber woven fabric reinforced prepreg 112 form a woven fabric in a staggered form.

The fiber reinforced resin frame 13 includes multiple layers of second fiber woven fabric reinforced prepregs stacked with each other, and fibers of each second fiber woven fabric reinforced prepreg form a woven fabric in a staggered form.

The lower fiber reinforced resin layer 14 includes multiple layers of third fiber woven fabric reinforced prepregs stacked with each other, and fibers of each third fiber woven fabric reinforced prepreg form a woven fabric in a staggered form.

In some embodiments, the metal plate 12 is selected from iron and an alloy thereof, aluminum and an alloy thereof, magnesium and an alloy thereof, copper and an alloy thereof, titanium and an alloy thereof or nickel and an alloy thereof.

In some embodiments, the metal plate 12 is a steel plate, and a galvanized layer, a galvanized iron alloy layer or an electrophoretic paint protective layer is arranged at an outer surface of the steel plate.

Compared with other metal materials, the steel plate used as the metal plate 12 has a better tensile strength and elongation, can satisfy requirements for impact resistance, and is beneficial to improving a protective effect on the battery pack 3.

The galvanized layer, the galvanized iron alloy layer or the electrophoretic paint protective layer is arranged at the outer surface of the steel plate, to improve corrosion resistance of the steel plate. When the upper fiber reinforced resin layer 11 or the lower fiber reinforced resin layer 14 is damaged, a galvanic effect formed by the galvanized layer or the galvanized iron alloy layer and the steel plate causes the galvanized layer or the galvanized iron alloy layer to corrode prior to the steel plate, thereby achieving a protective effect on the steel plate. The electrophoretic paint protective layer has good adhesion and can effectively isolate the steel plate from an external environment.

As shown in FIG. 4, another embodiment of the present disclosure provides a battery pack composite protection structure 10, including a battery pack 3 and the battery protection bottom plate 1 as described above. The battery protection bottom plate 1 is arranged below the battery pack 3, and a buffer zone 4 is formed between the battery pack 3 and the battery protection bottom plate 1.

Due to the adoption of the above battery protection bottom plate 1, the battery pack composite protection structure 10 effectively ensures the protection strength of the battery protection bottom plate 1 and the stable connection of the battery protection bottom plate 1 to the battery pack 3 while a lower overall thickness is ensured.

In some embodiments, the battery pack 3 includes a tray 31 and a battery arranged on the tray 31.

In different embodiments, the buffer zone 4 may be provided between the battery pack 3 and the battery protection bottom plate 1 in different ways.

As shown in FIG. 6, in an embodiment, a bottom surface of the tray 31 is provided with a groove inward to form the buffer zone 4, and the battery protection bottom plate 1 is in the shape of a flat plate. The battery protection bottom plate 1 covers the buffer zone 4.

As shown in FIG. 7, in an embodiment, the frame of the battery protection bottom plate 1 is connected to the bottom surface of the tray 31, and the bottom surface of the tray 31 is internally provided with a groove. The battery protection bottom plate 1 protrudes in a direction facing away from the tray 31 to form the buffer zone 4 between the tray 31 and the battery protection bottom plate 1.

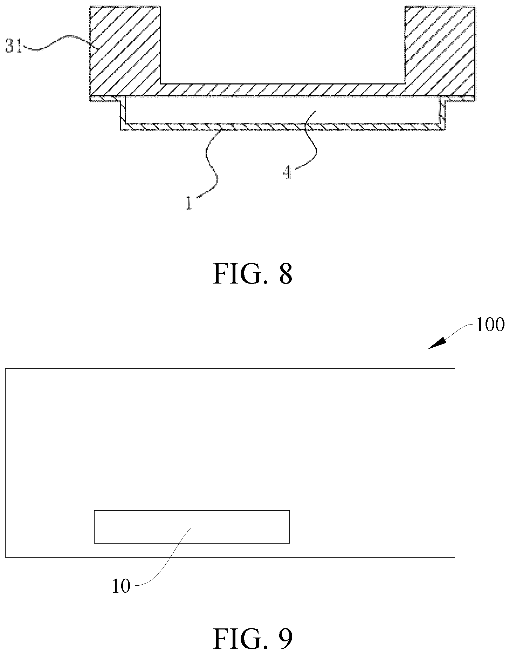

As shown in FIG. 8, in an embodiment, the frame of the battery protection bottom plate 1 is connected to the bottom surface of the tray 31, and the bottom surface of the tray 31 is a flat surface. The battery protection bottom plate 1 protrudes in a direction facing away from the tray 31 to form the buffer zone 4 between the tray 31 and the battery protection bottom plate 1.

In some embodiments, the buffer zone 4 is filled with a buffer layer 2, and the buffer layer 2 is selected from a honeycomb material or a rigid foam material.

The honeycomb material or the rigid foam material can absorb a collapse deformation space of the battery protection bottom plate 1 under an external strong impact, buffer and absorb part of energy of the external strong impact, and prevent compression deformation of the battery protection bottom plate 1 from impacting on internal battery cores of the battery pack 3, thereby further protecting the battery pack 3.

In some embodiments, the honeycomb material is selected from a PP honeycomb material or an aluminum honeycomb material; and the rigid foam material is selected from a PU rigid foam material, a PET rigid foam material, a PMI rigid foam material, a PVC rigid foam material, a PET rigid foam material, a MPP rigid foam material, a PLA rigid foam material, a PI rigid foam material or an EPTU rigid foam material.

Another embodiment of the present disclosure provides a vehicle 100, as shown in FIG. 9, including the battery protection bottom plate 1 or the battery pack composite protection structure 10 as described above.

The present disclosure is further described below by embodiments. A formula in Table 1 below is

$$\frac{\rho_2*(d_1+d_2+d_3)/d_2}{\rho_2+(\rho_1*d_1+\rho_3*d_3)/(d_1+d_3)} * \frac{(\sigma_1*d_1+\sigma_3*d_3)/(d_1+d_3)}{\sigma_2}.$$

.

Table 1

| Group | Thickness $d_1$/mm of a lower fiber reinforced resin layer | Thickness $d_2$/mm of a metal plate | Thickness $d_3$/mm of an upper fiber reinforced resin layer | Density $\rho_1$/g/cm³ of the lower fiber reinforced resin layer | Density $\rho_2$/g/cm³ of the metal plate | Density $\rho_3$/g/cm³ of the upper fiber reinforced resin layer | Tensile strength $\sigma_1$/MPa of the lower fiber reinforced resin layer | Tensile strength $\sigma_2$/MPa of the metal plate | Tensile strength $\sigma_3$/MPa of the upper fiber reinforced resin layer | Formula |
|---|---|---|---|---|---|---|---|---|---|---|
| Embodiment 1 | 1.6 | 1.6 | 1.6 | 1.7 | 7.9 | 1.7 | 360 | 780 | 360 | 1.14 |
| Embodiment 2 | 1.6 | 1 | 1.6 | 1.7 | 7.9 | 1.7 | 360 | 780 | 360 | 1.60 |
| Embodiment 3 | 1.6 | 0.8 | 1.6 | 1.7 | 7.9 | 1.7 | 360 | 780 | 360 | 1.90 |
| Embodiment 4 | 1.4 | 0.7 | 1.4 | 1.7 | 7.9 | 1.7 | 360 | 780 | 360 | 1.90 |
| Embodiment 5 | 1.4 | 1 | 1.2 | 1.7 | 7.9 | 1.7 | 360 | 780 | 360 | 1.37 |
| Embodiment 6 | 1.4 | 1 | 0.8 | 1.7 | 7.9 | 1.7 | 360 | 780 | 360 | 1.22 |
| Embodiment 7 | 1.4 | 1 | 0.6 | 1.7 | 7.9 | 1.7 | 360 | 780 | 360 | 1.14 |
| Embodiment 8 | 2 | 1 | 1.4 | 1.7 | 7.9 | 1.7 | 360 | 780 | 360 | 1.67 |
| Embodiment 9 | 1 | 1 | 1.4 | 1.7 | 7.9 | 1.7 | 360 | 780 | 360 | 1.29 |
| Embodiment 10 | 0.6 | 1 | 1.4 | 1.7 | 7.9 | 1.7 | 360 | 780 | 360 | 1.14 |
| Embodiment 11 | 1.6 | 1 | 1.6 | 1.5 | 7.9 | 1.7 | 340 | 780 | 360 | 1.57 |
| Embodiment 12 | 1.6 | 1 | 1.6 | 1.3 | 7.9 | 1.7 | 240 | 780 | 360 | 1.36 |
| Embodiment 13 | 1.6 | 1 | 1.6 | 1.9 | 7.9 | 1.7 | 380 | 780 | 380 | 1.67 |

| Group | Thickness $d_1$/mm of a lower fiber reinforced resin layer | Thickness $d_2$/mm of a metal plate | Thickness $d_3$/mm of an upper fiber reinforced resin layer | Density $\rho_1$/g/cm$^3$ of the lower fiber reinforced resin layer | Density $\rho_2$/g/cm$^3$ of the metal plate | Density $\rho_3$/g/cm$^3$ of the upper fiber reinforced resin layer | Tensile strength $\sigma_1$/MPa of the lower fiber reinforced resin layer | Tensile strength $\sigma_2$/MPa of the metal plate | Tensile strength $\sigma_3$/MPa of the upper fiber reinforced resin layer | Formula |
|---|---|---|---|---|---|---|---|---|---|---|
| Embodiment 14 | 1.6 | 1 | 1.6 | 1.7 | 7.9 | 1.7 | 360 | 700 | 360 | 1.78 |
| Embodiment 15 | 1.6 | 1 | 1.6 | 1.7 | 7.9 | 1.7 | 320 | 590 | 320 | 1.87 |
| Embodiment 16 | 1.6 | 1 | 1.6 | 1.7 | 7.9 | 1.5 | 360 | 780 | 340 | 1.57 |
| Embodiment 17 | 1.6 | 1 | 1.6 | 1.7 | 7.9 | 1.3 | 360 | 780 | 240 | 1.36 |
| Embodiment 18 | 1.6 | 1 | 1.6 | 1.7 | 7.9 | 1.9 | 360 | 780 | 380 | 1.62 |
| Embodiment 19 | 1.2 | 1.2 | 1.2 | 1.7 | 5.6 | 1.7 | 320 | 560 | 320 | 1.32 |
| Embodiment 20 | 1.2 | 1.2 | 1.2 | 1.7 | 8.5 | 1.7 | 320 | 650 | 320 | 1.23 |
| Embodiment 21 | 1.6 | 1.6 | 1.6 | 1.7 | 2.7 | 1.7 | 320 | 370 | 320 | 1.59 |
| Embodiment 22 | 1.6 | 1 | 1.7 | 1.7 | 7.9 | 1.7 | 240 | 780 | 240 | 1.09 |
| Embodiment 23 | 1.6 | 0.6 | 1.6 | 1.7 | 7.9 | 1.7 | 360 | 980 | 360 | 1.91 |
| Embodiment 24 | 1.4 | 1 | 0.4 | 1.7 | 7.9 | 1.7 | 360 | 780 | 360 | 1.06 |
| Embodiment 25 | 1.6 | 1 | 1.6 | 1.7 | 7.9 | 1.7 | 360 | 1180 | 360 | 1.05 |
| Embodiment 26 | 0.4 | 1 | 1.4 | 1.7 | 7.9 | 1.7 | 360 | 780 | 360 | 1.06 |

EP 4 535 530 A1

| Group | Thickness $d_1$/mm of a lower fiber reinforced resin layer | Thickness $d_2$/mm of a metal plate | Thickness $d_3$/mm of an upper fiber reinforced resin layer | Density $\rho_1$/g/cm$^3$ of the lower fiber reinforced resin layer | Density $\rho_2$/g/cm$^3$ of the metal plate | Density $\rho_3$/g/cm$^3$ of the upper fiber reinforced resin layer | Tensile strength $\sigma_1$/MPa of the lower fiber reinforced resin layer | Tensile strength $\sigma_2$/MPa of the metal plate | Tensile strength $\sigma_3$/MPa of the upper fiber reinforced resin layer | Formula |
|---|---|---|---|---|---|---|---|---|---|---|
| Embodiment 27 | 1.6 | 1 | 1.6 | 1.7 | 7.9 | 1.3 | 360 | 550 | 240 | 1.93 |
| Comparative Example 1 | 0.6 | 0.8 | 0.6 | 1.7 | 7.9 | 1.7 | 360 | 780 | 320 | 0.90 |
| Comparative Example 2 | 0.6 | 1.2 | 0.6 | 1.7 | 7.9 | 1.7 | 320 | 590 | 360 | 0.95 |
| Comparative Example 3 | 1 | 1.5 | 0.6 | 1.7 | 7.9 | 1.7 | 320 | 590 | 360 | 0.97 |
| Comparative Example 4 | 1 | 1.5 | 1.2 | 1.5 | 7.9 | 1.5 | 320 | 780 | 320 | 0.85 |
| Comparative Example 5 | 1.6 | 1.5 | 1.6 | 1.9 | 7.9 | 1.9 | 380 | 460 | 380 | 2.09 |
| Comparative Example 6 | 1.6 | 0.8 | 1.6 | 1.7 | 7.9 | 1.7 | 360 | 590 | 320 | 2.37 |
| Comparative Example 7 | 0.8 | 1.4 | 0.8 | 1.6 | 7.9 | 1.6 | 380 | 320 | 360 | 2.06 |

Embodiment 1

This embodiment is used to illustrate a battery pack composite protection structure according to the present disclosure, which includes a battery pack, a buffer layer and a battery protection bottom plate. The battery protection bottom plate includes a metal plate, an upper fiber reinforced resin layer, a fiber reinforced resin frame and a lower fiber reinforced resin layer. The metal plate is a galvanized steel plate. The metal plate is located between the upper fiber reinforced resin layer and the lower fiber reinforced resin layer. The metal plate is located inside the fiber reinforced resin frame. A top surface of the fiber reinforced resin frame is integrally connected to the upper fiber reinforced resin layer, and a bottom surface of the fiber reinforced resin frame is integrally connected to the lower fiber reinforced resin layer. The battery protection bottom plate is arranged below the battery pack, and a buffer zone is formed between the battery pack and the battery protection bottom plate. The buffer zone is filled with the buffer layer, and a frame of the battery protection bottom plate is mounted to a bottom frame of the battery pack by a rivet.

The thickness $d_3$ of the upper fiber reinforced resin layer is 1.6 mm. The thickness $d_1$ of the lower fiber reinforced resin layer is 1.6 mm. The thickness $d_2$ of the metal plate is 1.6 mm. The density $\rho_2$ of the metal plate is 7.9 g/cm$^3$. The density $\rho_3$ of the upper fiber reinforced resin layer is 1.7 g/cm$^3$. The density $\rho_1$ of the lower fiber reinforced resin layer is 1.7 g/cm$^3$. The tensile strength $\sigma_2$ of the metal plate is 780 MPa. The tensile strength $\sigma_3$ of the upper fiber reinforced resin layer is 360 MPa. The tensile strength $\sigma_1$ of the lower fiber reinforced resin layer is 360 MPa.

Embodiments 2 to 27

Embodiments 2 to 27 are used to illustrate a battery pack composite protection structure according to the present disclosure, which includes most of the structures in Embodiment 1, but differs in that:
the upper fiber reinforced resin layer, the metal plate and the lower fiber reinforced resin layer provided in each of Embodiments 2 to 27 in Table 1 are used.

Comparative Examples 1 to 7

Comparative Examples 1 to 7 are used to comparatively illustrate a battery pack composite protection structure according to the present disclosure, which includes most of the structures in Embodiment 1, but differs in that:
the upper fiber reinforced resin layer, the metal plate and the lower fiber reinforced resin layer provided in each of Comparative Examples 1 to 7 in Table 1 are used.

Performance testing

Performance of the battery pack composite protection structures according to the above embodiments and comparative examples was tested as follows:

1. A ball was used as an impact head to impact on a battery protection bottom plate of each battery pack composite protection structure, so as to simulate a working condition that a bottom of a whole vehicle is impacted by a foreign object. The ball had a diameter of 25 mm, a weight of 10 kg, impact energy of 300 J and an impact speed of 8.5 m/s. A center point of the battery protection bottom plate and four points on a periphery of the center point were selected as impact points to impact for five times.

A dent deformation amount of a battery pack tray at each impact point was measured, and an impact point with a maximum dent deformation amount was selected and denoted as a dent deformation amount of the battery pack tray. Generally, it is required that the dent amount of the 300 J energy impact is not greater than 3 mm.

2. The battery pack composite protection structure was mounted on a vibration table to perform 30 w mileage simulation vibration to check a rivet mounting status after vibration and whether the battery protection bottom plate was delaminated.

30 w mileage simulation vibration test: According to requirements of GB/T 2423.43, a test object was mounted on the vibration table, and a torque at each mounting point was tested and recorded. The vibration test was performed in three directions. For the test process, refer to GB/T 2423.56, with specific test conditions as follows:

Firstly, random vibration was performed in a Z direction for 21 h (with random vibration conditions shown in Table 2), and then vibration was performed at a fixed frequency in the Z direction for 1 h (fixed frequency vibration conditions: fixed frequency of 24 Hz, and fixed frequency amplitude of 1 g).

Secondly, random vibration was performed in a Y direction for 21 h (with random vibration conditions shown in Table 2), and then vibration was performed at a fixed frequency in the Y direction for 1 h (fixed frequency vibration conditions: fixed frequency of 24 Hz, and fixed frequency amplitude of 1 g).

Furthermore, random vibration was performed in an X direction for 21 h (with random vibration conditions shown in Table 2), and then vibration was performed at a fixed frequency in the X direction for 1 h (fixed frequency vibration conditions: fixed frequency of 24 Hz, and fixed frequency amplitude of 1 g).

PSD stands for power spectral density, representing a power spectral density of vibration at a frequency. An r.m.s. value represents a comprehensive acceleration of vibration, and feeds back vibration intensity.

Table 2 Random vibration test

| X direction | | Y direction | | Z direction | |
|---|---|---|---|---|---|
| Frequency Hz | PSD g$^2$/Hz | Frequency Hz | PSD g$^2$/Hz | Frequency Hz | PSD g$^2$/Hz |
| 5 | 0.005 | 5 | 0.002 | 5 | 0.012 |
| 11.5 | 0.005 | 10 | 0.004 | 9.5 | 0.012 |
| 13 | 0.01726 | 14 | 0.01206 | 11 | 0.0198 |
| 21.5 | 0.005 | 34 | 0.001751 | 78 | 0.1193 |
| 30 | 0.005 | 40 | 0.00857 | 80 | 0.0009 |
| 35 | 0.0032 | 46 | 0.001 | 100 | 0.0009 |
| 38 | 0.008383 | 74 | 0.0008782 | 200 | 0.00006 |
| 48 | 0.00132 | 77 | 0.0005 | | |
| 67 | 0.000478 | 200 | 0.00012 | | |
| 76 | 0.003525 | | | | |
| 84 | 0.00026 | | | | |
| 200 | 0.00002 | | | | |
| r.m.s. value | 0.54 g | r.m.s. value | 0.49 g | r.m.s. value | 0.64 g |
| Time | 21 h | Time | 21 h | Time | 21 h |

Obtained test results were filled in Table 3.

Table 3

| Group | Dent deformation amount/mm of a battery tray | Influence of 30 w kilometer vibration on protection plate connection (whether delamination or rivet dropping occurs) |
|---|---|---|
| Embodiment 1 | 1.2 | No influence |
| Embodiment 2 | 2.2 | No influence |
| Embodiment 3 | 2.6 | No influence |
| Embodiment 4 | 2.7 | No influence |
| Embodiment 5 | 2.3 | No influence |
| Embodiment 6 | 2.5 | No influence |
| Embodiment 7 | 2.7 | No influence |
| Embodiment 8 | 2.2 | No influence |
| Embodiment 9 | 2.4 | No influence |
| Embodiment 10 | 2.6 | No influence |
| Embodiment 11 | 2.4 | No influence |
| Embodiment 12 | 2.6 | No influence |
| Embodiment 13 | 2.2 | No influence |
| Embodiment 14 | 2.4 | No influence |

(continued)

| Group | Dent deformation amount/mm of a battery tray | Influence of 30 w kilometer vibration on protection plate connection (whether delamination or rivet dropping occurs) |
|---|---|---|
| Embodiment 15 | 2.6 | No influence |
| Embodiment 16 | 1.8 | No influence |
| Embodiment 17 | 2.3 | No influence |
| Embodiment 18 | 2.2 | No influence |
| Embodiment 19 | 2.6 | No influence |
| Embodiment 20 | 2.4 | No influence |
| Embodiment 21 | 2.7 | No influence |
| Embodiment 22 | 2.8 | No influence |
| Embodiment 23 | 2.8 | No influence |
| Embodiment 24 | 2.9 | No influence |
| Embodiment 25 | 2.8 | No influence |
| Embodiment 26 | 2.9 | No influence |
| Embodiment 27 | 2.9 | No influence |
| Comparative Example 1 | 5.2 | No influence |
| Comparative Example 2 | 4.2 | Some rivets dropped and delamination occurred after vibration. |
| Comparative Example 3 | 3.6 | Some rivets dropped and delamination occurred after vibration. |
| Comparative Example 4 | 2.4 | Some rivets dropped and delamination occurred after vibration. |
| Comparative Example 5 | 1.9 | Delamination occurred after vibration. |
| Comparative Example 6 | 5.2 | Delamination occurred after vibration. |
| Comparative Example 7 | 3.5 | Mounting holes were torn after vibration. |

As can be seen from test results in Table 3, the thickness $d_3$ of the upper fiber reinforced resin layer, the thickness $d_1$ of the lower fiber reinforced resin layer, the thickness $d_2$ of the metal plate, the density $\rho_2$ of the metal plate, the density $\rho_3$ of the upper fiber reinforced resin layer, the density $\rho_1$ of the lower fiber reinforced resin layer, the tensile strength $\sigma_2$ of the metal plate, the tensile strength $\sigma_3$ of the upper fiber reinforced resin layer and the tensile strength $\sigma_1$ of the lower fiber reinforced resin layer have an interrelated effect in improving impact resistance of the battery pack and mounting stability of the battery protection bottom plate. When they are met, an obtained battery pack composite protection structure can adapt to application conditions under long-term impact conditions.

The foregoing descriptions are merely preferred embodiments of the present disclosure, and are not intended to limit the present disclosure. Any modification, equivalent replacement, improvement and the like made within the spirit and principle of the present disclosure shall fall within the protection scope of the present disclosure.

**Claims**

1.  A battery protection bottom plate (1), comprising an upper fiber reinforced resin layer (11), a metal plate (12) and a lower fiber reinforced resin layer (14), the metal plate (12) being located between the upper fiber reinforced resin layer (11) and the lower fiber reinforced resin layer (14); and the metal plate (12), the upper fiber reinforced resin layer (11) and the lower fiber reinforced resin layer (14) satisfying the following condition:

$$1 \leq \frac{\rho_2*(d_1+d_2+d_3)/d_2}{\rho_2+(\rho_1*d_1+\rho_3*d_3)/(d_1+d_3)} * \frac{(\sigma_1*d_1+\sigma_3*d_3)/(d_1+d_3)}{\sigma_2} \leq 2$$

wherein $d_1$ is a thickness of the lower fiber reinforced resin layer (14) in mm; $d_2$ is a thickness of the metal plate (12) in

mm; $d_3$ is a thickness of the upper fiber reinforced resin layer (11) in mm; $\rho_1$ is a density of the lower fiber reinforced resin layer (14) in g/cm$^3$; $\rho_2$ is a density of the metal plate (12) in g/cm$^3$; $\rho_3$ is a density of the upper fiber reinforced resin layer (11) in g/cm$^3$; $\sigma_1$ is a tensile strength of the lower fiber reinforced resin layer (14) in MPa; $\sigma_2$ is a tensile strength of the metal plate (12) in MPa; and $\sigma_3$ is a tensile strength of the upper fiber reinforced resin layer (11) in MPa.

2. The battery protection bottom plate (1) according to claim 1, wherein the metal plate (12), the upper fiber reinforced resin layer (11) and the lower fiber reinforced resin layer (14) satisfy the following condition:

$$1.1 \leq \frac{\rho_2*(d_1+d_2+d_3)/d_2}{\rho_2+(\rho_1*d_1+\rho_3*d_3)/(d_1+d_3)} * \frac{(\sigma_1*d_1+\sigma_3*d_3)/(d_1+d_3)}{\sigma_2} \leq 1.9.$$

3. The battery protection bottom plate (1) according to claim 1 or 2, wherein the thickness $d_3$ of the upper fiber reinforced resin layer (11) ranges from 0.4 mm to 1.6 mm; and the thickness $d_1$ of the lower fiber reinforced resin layer (14) ranges from 0.6 mm to 2 mm.

4. The battery protection bottom plate (1) according to any one of claims 1 to 3, wherein the thickness $d_2$ of the metal plate (12) ranges from 0.7 mm to 1.6 mm.

5. The battery protection bottom plate (1) according to any one of claims 1 to 4, wherein the density $\rho_2$ of the metal plate (12) ranges from 2.7 g/cm$^3$ to 8.5 g/cm$^3$.

6. The battery protection bottom plate (1) according to any one of claims 1 to 5, wherein the density $\rho_3$ of the upper fiber reinforced resin layer (11) ranges from 1.3 g/cm$^3$ to 1.9 g/cm$^3$, and the density $\rho_1$ of the lower fiber reinforced resin layer (14) ranges from 1.3 g/cm$^3$ to 1.9 g/cm$^3$.

7. The battery protection bottom plate (1) according to any one of claims 1 to 6, wherein the tensile strength $\sigma_2$ of the metal plate (12) ranges from 590 MPa to 1180 MPa.

8. The battery protection bottom plate (1) according to any one of claims 1 to 7, wherein the tensile strength $\sigma_3$ of the upper fiber reinforced resin layer (11) ranges from 240 MPa to 380 MPa, and the tensile strength $\sigma_1$ of the lower fiber reinforced resin layer (14) ranges from 240 MPa to 380 MPa.

9. The battery protection bottom plate (1) according to any one of claims 1 to 8, further comprising a fiber reinforced resin frame (13), the metal plate (12) and the fiber reinforced resin frame (13) being located between the upper fiber reinforced resin layer (11) and the lower fiber reinforced resin layer (14), the metal plate (12) being located inside the fiber reinforced resin frame (13), a top surface of the fiber reinforced resin frame (13) being integrally connected to the upper fiber reinforced resin layer (11), and a bottom surface of the fiber reinforced resin frame (13) being integrally connected to the lower fiber reinforced resin layer (14).

10. The battery protection bottom plate (1) according to claim 9, wherein a plurality of mounting holes (15) are spaced away in an inner side of an edge of the battery protection bottom plate (1), and the mounting holes (15) sequentially run through the upper fiber reinforced resin layer (11), the fiber reinforced resin frame (13) and the lower fiber reinforced resin layer (14).

11. The battery protection bottom plate (1) according to claim 9 or 10, wherein the upper fiber reinforced resin layer (11), the fiber reinforced resin frame (13) and the lower fiber reinforced resin layer (14) each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

12. The battery protection bottom plate (1) according to any one of claims 9 to 11, wherein the upper fiber reinforced resin layer (11), the fiber reinforced resin frame (13) and the lower fiber reinforced resin layer (14) each are a glass fiber reinforced resin member, the glass fiber reinforced resin member contains a glass fiber with a content ranging from 50% to 70%, and the glass fiber has an alkali content less than 0.8%.

13. The battery protection bottom plate (1) according to any one of claims 9 to 12, wherein the upper fiber reinforced resin layer (11) comprises a plurality of layers of first fiber reinforced prepregs (110) stacked with each other;

the fiber reinforced resin frame (13) comprises a plurality of layers of second fiber reinforced prepregs stacked with each other; and
the lower fiber reinforced resin layer (14) comprises a plurality of layers of third fiber reinforced prepregs stacked with each other.

14. The battery protection bottom plate (1) according to any one of claims 1 to 13, wherein the metal plate (12) is a steel plate, and a galvanized layer, a galvanized iron alloy layer or an electrophoretic paint protective layer is arranged at an outer surface of the steel plate.

15. A battery pack composite protection structure (10), comprising a battery pack (3) and the battery protection bottom plate (1) according to any one of claims 1 to 14, the battery protection bottom plate (1) being arranged below the battery pack (3), and a buffer zone (4) being formed between the battery pack (3) and the battery protection bottom plate (1).

16. The battery pack composite protection structure (10) according to claim 15, wherein the buffer zone (4) is filled with a buffer layer (2), and the buffer layer (2) is selected from a honeycomb material or a rigid foam material.

17. A vehicle, comprising the battery protection bottom plate (1) according to any one of claims 1 to 14 or the battery pack composite protection structure (10) according to claim 15 or 16.

1

11

12

13

14

## FIG. 1

111

110

111

110

111

111

## FIG. 2

112

112

112

112

## FIG. 3

10

3

1

2

A

## FIG. 4

A

1

15

FIG. 5

31

1

4

FIG. 6

31

1

4

FIG. 7

31

4

1

FIG. 8

100

10

FIG. 9

# EP 4 535 530 A1

| INTERNATIONAL SEARCH REPORT | International application No. |
|---|---|
| | **PCT/CN2023/096761** |

**A.  CLASSIFICATION OF SUBJECT MATTER**

H01M50/231(2021.01)i;  H01M50/224(2021.01)i;  H01M50/233(2021.01)i;  H01M50/242(2021.01)i;  H01M50/249(2021.01)i

According to International Patent Classification (IPC) or to both national classification and IPC

**B.  FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 车辆, 电池, 防护底板, 金属板, 纤维增强树脂层, 厚度, 拉伸强度, 密度, vehicle, battery, protective floor, metal plate, fiber reinforced resin layer, thickness, tensile strength, density

**C.  DOCUMENTS CONSIDERED TO BE RELEVANT**

| Category* | Citation of document, with indication, where appropriate, of the relevant passages | Relevant to claim No. |
|---|---|---|
| A | CN 215451600 U (BYD CO., LTD.) 07 January 2022 (2022-01-07) description, paragraphs 27-36, and figures 1-5 | 1-17 |
| A | WO 2017090676 A1 (MITSUBISHI PLASTICS INC.) 01 June 2017 (2017-06-01) description, paragraphs 29-138, and figures 1-2 | 1-17 |
| A | JP 2018183915 A (MITSUBISHI CHEMICAL CORPORATION) 22 November 2018 (2018-11-22) entire document | 1-17 |
| A | WO 2019034478 A1 (THYSSENKRUPP STEEL EUROPE AG et al.) 21 February 2019 (2019-02-21) entire document | 1-17 |
| A | WO 2021112077 A1 (TOYO KOHAN CO., LTD. et al.) 10 June 2021 (2021-06-10) entire document | 1-17 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **31 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096761**

| Patent document cited in search report | | | Publication date (day/month/year) | Patent family member(s) | | | Publication date (day/month/year) |
|---|---|---|---|---|---|---|---|
| CN | 215451600 | U | 07 January 2022 | None | | | |
| WO | 2017090676 | A1 | 01 June 2017 | JPWO | 2017090676 | A1 | 06 September 2018 |
| | | | | JP | 6717321 | B2 | 01 July 2020 |
| JP | 2018183915 | A | 22 November 2018 | JP | 6805951 | B2 | 23 December 2020 |
| WO | 2019034478 | A1 | 21 February 2019 | DE | 102017214275 | B3 | 17 January 2019 |
| WO | 2021112077 | A1 | 10 June 2021 | EP | 4070946 | A1 | 12 October 2022 |
| | | | | US | 2023001652 | A1 | 05 January 2023 |
| | | | | JPWO | 2021112077 | A1 | 10 June 2021 |
| | | | | CN | 114761225 | A | 15 July 2022 |

Form PCT/ISA/210 (patent family annex) (July 2022)

**REFERENCES CITED IN THE DESCRIPTION**

**Patent documents cited in the description**

- CN 202210609361
- GB 22812010 T
- GB 14472005 T
- GB 242343 T
- GB 242356 T